# EUROPÄISCHE PATENTSCHRIFT

(11) **EP 1 519 478 B1**
(45) Veröffentlichungstag und Bekanntmachung des Hinweises auf die Patenterteilung: **05.04.2017**
(21) Anmeldenummer: 04022017.0
(22) Anmeldetag: 16.09.2004
(51) Int. Cl.: H02P 23/00

(54) **Sägemaschine**
Sawing machine
Machine à scier

(30) Priorität: 18.09.2003 DE 10345353
(43) Veröffentlichungstag der Anmeldung: 30.03.2005
(73) Patentinhaber: Behringer GmbH, 74912 Kirchardt (DE)
(72) Erfinder: Behringer, Christian, 74912 Kirchardt (DE)
(74) Vertreter: Hoeger, Stellrecht & Partner Patentanwälte mbB

(56) Entgegenhaltungen:
- DE-A1- 3 630 441
- DE-A1- 4 143 052
- DE-T2- 60 002 509
- JP-A- 2000 152 694

## Beschreibung

Die Erfindung betrifft eine Sägemaschine mit einer Mehrzahl von Antrieben und mit einer Steuerungseinrichtung.

Derartige Sägemaschinen sind beispielsweise unter der Typenbezeichnung HBP der Firma Behringer GmbH bekannt.

Aus der DE 41 43 052 A1 ist eine Gehrungssäge bekannt, welche zwei in einer Verschiebungsrichtung hintereinander angeordnete Kreissägeblätter aufweist, die in schneidenden, entsprechend einem Gehrungswinkel zueinander geneigten Ebenen angeordnet sind.

Der Erfindung liegt die Aufgabe zugrunde, eine Sägemaschine der eingangs genannten Art zu schaffen, welche bezüglich der Antriebssteuerung auf einfache Weise aufgebaut ist.

Diese Aufgabe wird bei der eingangs genannten Sägemaschine erfindungsgemäß dadurch gelöst, daß ein erster Antrieb und ein zweiter Antrieb so angesteuert sind, daß sie nicht gleichzeitig betätigbar sind, wobei der erste Antrieb ein Sägewerkzeug antreibt und der zweite Antrieb einen Nachschubschlitten für ein oder mehrere Werkstücke antreibt, daß der erste Antrieb und der zweite Antrieb an einen gemeinsamen Frequenzumrichter gekoppelt sind, und daß der Frequenzumrichter einen Ausgang aufweist, welchem eine Mehrzahl von in Reihe geschalteten Schaltern nachgeordnet ist.

Durch die erfindungsgemäße Lösung, bei der ein gemeinsamer Frequenzumrichter dem ersten Antrieb und dem zweiten Antrieb zugeordnet ist, läßt sich die Anzahl der notwendigen Frequenzumrichter minimieren. Dadurch erhält man eine Kostenersparnis. Weiterhin ist der Platzbedarf in einem Schaltkasten bzw. Schaltschrank verringert. Dies führt auch dazu, daß die Anzahl von Wärmequellen in dem Schaltschrank und die Anzahl elektronischer Störungsquellen in dem Schaltschrank verringert ist.

Die erfindungsgemäße Sägemaschine ist dadurch einfacher aufgebaut und arbeitet störungsfreier.

Erfindungsgemäß wird dafür gesorgt, daß der erste Antrieb und der zweite Antrieb nicht gleichzeitig aktivierbar sind. Dies ist beispielsweise möglich, wenn der erste Antrieb ein Sägeantrieb ist und der zweite Antrieb ein Antrieb für einen Nachschubschlitten für Werkstücke. Dadurch läßt es sich erreichen, daß der Frequenzumrichter zu einem bestimmten Zeitpunkt höchstens einen Antrieb ansteuern muß. Dies wiederum ermöglicht es, einen gemeinsamen Frequenzumrichter den beiden Antrieben zuzuordnen.

Insbesondere ist über den Frequenzumrichter die Drehzahl des ersten Antriebs und die Drehzahl des zweiten Antriebs einstellbar. Ein Frequenzumrichter richtet die Netzfrequenz, beispielsweise 50 Hz oder 60 Hz eines Wechselstroms um, um über die umgerichtete Frequenz die Drehzahl des entsprechenden Antriebs zu steuern. In einem weiten Drehzahlbereich ist dabei das Drehmoment frequenzunabhängig. Erfindungsgemäß läßt sich über einen einzigen Frequenzumrichter sowohl der erste Antrieb als auch der zweite Antrieb - nur nicht gleichzeitig - ansteuern. Es ist dabei auch grundsätzlich möglich, mindestens einen weiteren Antrieb anzusteuern, wenn dieser nicht gleichzeitig mit dem ersten Antrieb und dem zweiten Antrieb betätigt wird.

Insbesondere sind der erste Antrieb und der zweite Antrieb zu unterschiedlichen Zeiten aktiviert, so daß sichergestellt ist, daß über den Frequenzumrichter höchstens ein einziger Antrieb angesteuert werden muß.

Ganz besonders vorteilhaft ist es, wenn der Frequenzumrichter den ersten Antrieb gemäß einem ersten Parametersatz ansteuert und den zweiten Antrieb gemäß einem zweiten Parametersatz ansteuert. Dadurch läßt sich eine Funktionstrennung bezüglich der Antriebsansteuerung erreichen. Üblicherweise haben unterschiedliche Antriebe unterschiedliche Anforderungen bezüglich u.a. Drehzahl, Drehmoment (bestimmt durch Frequenz und Spannung), bezüglich Drehrichtung, Geschwindigkeit oder Rampenverlauf. Durch die Verwendung eines ersten Parametersatzes und eines zweiten Parametersatzes, welche jeweils angepaßt sind an den ersten Antrieb und an den zweiten Antrieb, wird erreicht, daß trotz Ansteuerung über einen gemeinsamen Frequenzumrichter der jeweilige, zu einem bestimmten Zeitpunkt angesteuerte Antrieb optimal läuft. Es können für weitere Antriebe auch weitere Parametersätze vorgesehen sein.

Insbesondere sind die Parameter für den ersten Parametersatz und/oder den zweiten Parametersatz in dem Frequenzumrichter abgelegt, so daß sichergestellt ist, daß der entsprechende Antrieb mit dem richtigen Parametersatz angesteuert ist. Entsprechend können auch Parameter für weitere Parametersätze abgelegt sein. Die für einen speziellen Antrieb benötigten Parameter (entsprechend dem ersten oder zweiten Parametersatz) lassen sich durch die Steuerungseinrichtung aktivieren.

Der erste Parametersatz und der zweite Parametersatz sind unterschiedlich. Dadurch ist keine parallele Ansteuerung des ersten Antriebs und des zweiten Antriebs möglich, da eben unterschiedliche Ausgangsgrößen wie Spannung und Frequenz bei unterschiedlichen Antrieben eingestellt werden müssen. Durch die erfindungsgemäße Lösung, bei der sichergestellt ist, daß die beiden Antriebe nicht gleichzeitig betätigt sind, läßt sich dennoch ein gemeinsamer Frequenzumrichter für die Ansteuerung des ersten und des zweiten Antriebs (oder weiterer Antriebe) verwenden.

Für den ersten Antrieb und den zweiten Antrieb sind dabei mittels der jeweiligen zugeordneten Parametersätze mindestens eine der Größen Spannung, Frequenz, Drehrichtung, Geschwindigkeit oder Rampenverlauf einstellbar.

Günstig ist es, wenn über die Steuerungseinrichtung zwischen dem ersten Parametersatz und dem zweiten Parametersatz umschaltbar ist. Dadurch erfolgt eine Umschaltung zwischen der Ansteuerung des ersten Antriebs oder des zweiten Antriebs. Die Umschaltung erfolgt beispielsweise automatisch während eines Maschinenzyklusses zu einem geeigneten Zeitpunkt initiiert durch die Steuerungseinrichtung.

Aus dem gleichen Grund ist es günstig, wenn mindestens ein Schalter oder eine Schaltung vorgesehen ist, welcher so ausgebildet ist, daß höchstens ein Antrieb angesteuert ist. Der mindestens eine Schalter bzw. Schaltung kann beispielsweise einen Motorschütz umfassen. Beispielsweise ist es vorgesehen, daß dem ersten Antrieb und dem zweiten Antrieb jeweils ein Motorschütz zugeordnet ist und daß dafür gesorgt ist, daß stets mindestens einer der beiden Motorschütze offen ist, so daß höchstens einer der beiden Antriebe angesteuert ist.

Es ist vorgesehen, daß der erste Antrieb ein Werkzeug antreibt. Bei einer Sägemaschine ist das Werkzeug ein Sägewerkzeug. Bei einer Bandsägemaschine ist das Werkzeug ein Sägeband. Ein solches Sägeband läßt sich üblicherweise unabhängig von einem Nachschubschlitten für Werkstücke antreiben, so daß ein Betriebsvorgang der Sägemaschine möglich ist, bei dem die Antriebe für das Sägewerkzeug und für einen Nachschubschlitten nicht gemeinsam bewegt werden müssen.

Es ist dann günstig, wenn der zweite Antrieb einen Schlitten antreibt und insbesondere einen Schlitten einer Fördervorrichtung für Werkstücke antreibt.

Der zweite Antrieb treibt dann einen Nachschubschlitten für einen oder mehrere Werkstücke an.

Die nachfolgende Beschreibung einer bevorzugten Ausführungsform dient im Zusammenhang mit der Zeichnung der näheren Erläuterung der Erfindung. Es zeigen:
- Figur 1: eine Seitenansicht eines Ausführungsbeispiels einer erfindungsgemäßen Sägemaschine und
- Figur 2: ein Ausführungsbeispiel eines Frequenzumrichters.
Ein Ausführungsbeispiel einer erfindungsgemäßen Sägemaschine, welche in Figur 1 gezeigt und dort als Ganzes mit 10 bezeichnet ist, umfaßt ein Maschinengestell 12, mittels welchem die Sägemaschine 10 auf einer Unterlage aufgestellt ist.

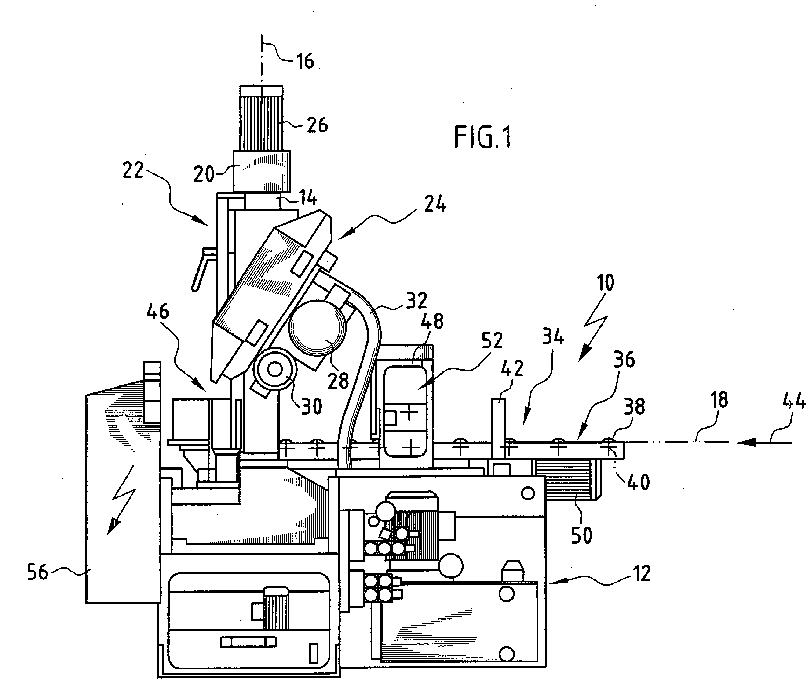

An dem Maschinengestell 12 sind zwei Führungssäulen 14 fixiert, welche sich in einer Höhenrichtung 16 erstrecken. (In Figur 1 ist nur eine Säule 14 sichtbar.) Die Führungssäulen 14 ragen über eine Zuführungsebene 18 für Werkstücke hinaus. Die Höhenrichtung 16 liegt insbesondere senkrecht zu der Zuführungsebene 18.

Die Führungssäulen 14 sind an ihren oberen Enden über ein Verbindungselement 20 verbunden, so daß ein Führungsportal 22 gebildet ist, an dem ein Sägerahmen 24 in der Höhenrichtung 16 verschieblich geführt ist. Die Verschiebung in der Höhenrichtung 16 ist durch einen Sägerahmenantrieb 26 angetrieben. Bei dem Sägerahmenantrieb 26 handelt es sich beispielsweise um einen elektrischen Antrieb oder um einen hydraulischen Antrieb.

Der Sägerahmen 24 umfaßt einen Antrieb 28 für ein Sägewerkzeug wie ein Sägeband (welches in der Figur 1 nicht sichtbar ist). Der Sägeantrieb 28 treibt das Sägeband am Sägerahmen 24 in einer umlaufenden (unidirektionalen) Bewegung an, um so einen Sägeschnitt in ein Werkstück einbringen zu können.

An dem Sägerahmen 24 ist ferner ein Antrieb 30 für eine Reinigungsbürste gehalten, welche dazu dient, das Sägeband von Sägespänen zu reinigen.

Die Antriebe 28, 30 am Sägerahmen 24 werden über Leitungen mit Steuersignalen und mit Energie versorgt, wobei diese Leitungen in einem flexiblen Rohr 32 geführt sind, welches die Verschiebung des Sägerahmens 24 an dem Führungsportal 22 in der Höhenrichtung 16 ermöglicht.

An dem Maschinengestell 12 ist ferner eine Fördervorrichtung 34 für Werkstücke fixiert, welche beispielsweise eine Rollenbahn 36 mit beabstandeten Rollen 38 umfaßt. Die Drehachsen 40 dieser Rollen 38 liegen in einer Ebene, welche parallel zur Zuführungsebene 18 ist. Die Zuführungsebene 18 wird durch eine Berührungsfläche der Rollen 38 mit einem Werkstück gebildet.

Auf der Rollenbahn 36 läßt sich ein zu sägendes Werkstück, beispielsweise ein Eisenträger, über die Fördervorrichtung 34 zu dem Führungsportal 22 bewegen, wo dann ein Sägeschnitt durch Bewegung des Sägerahmens 24 nach unten mit angetriebenem Sägeband einbringbar ist.

Bei dem in Figur 1 gezeigten Ausführungsbeispiel sind an der Rollenbahn 36 seitlich beispielsweise gegenüberliegende Leisten 42 vorgesehen, welche für einen seitlichen Anschlag sorgen, so daß ein Werkstück nicht seitlich herunterfallen kann.

In der Nähe des Führungsportals 22 ist eine bezüglich einer Zuführungsrichtung 44 für Werkstücke feststehende Spannbackenvorrichtung 46 angeordnet. Ein Werkstück läßt sich zwischen gegenüberliegenden Spannbacken der Spannbackenvorrichtung 46 einklemmen, um dieses während eines Sägevorgangs bezüglich des Maschinengestells 12 zu fixieren.

Die Fördervorrichtung 34 weist einen Schlitten 48 auf, welcher in der Zuführungsrichtung 44 (und deren Gegenrichtung) beweglich ist. Zur Bewegung des Schlittens 48 in der Zuführungsrichtung 44 (parallel zur Zuführungsebene 18) ist ein Antrieb 50 vorgesehen, welcher beispielsweise unterhalb der Rollenbahn 36 angeordnet ist. Bei dem Antrieb 50 zur Bewegung des Schlittens 48 kann es sich um einen Spindelantrieb handeln.

Vorzugsweise umfaßt der Schlitten 48 eine Spannbackenvorrichtung 52 mit zwei gegenüberliegenden Spannbacken, zwischen denen ein Werkstück einklemmbar ist. Durch Bewegung des Schlittens 48 mit eingeklemmtem Werkstück kann dann dem Führungsportal 22 das Werkstück zugeführt werden und insbesondere der feststehenden Spannbackenvorrichtung 46 zugeführt werden, um dort für eine Fixierung des Werkstückes zur Einbringung eines Sägeschnitts zu sorgen.

Es ist beispielsweise möglich, daß ein Sägevorgarig derart durchgeführt wird, daß ein zugeführtes Werkstück, wie beispielsweise ein Eisenträger, an der fest stehenden Spannbackenvorrichtung 46 eingespannt wird, wobei während diesem Zuführungsvorgang und Einspannungsvorgang der Sägerahmen 24 nach oben verschoben ist, so daß er außerhalb des Zuführungsraums für das Werkstück positioniert ist. Nach Fixierung des Werkstücks wird ein Sägevorgang durchgeführt, indem der Sägerahmen 24 nach unten gefahren wird.

Es kann dann vorgesehen sein, daß der Sägerahmen 24 nach Vollendung des Schnitts wieder nach oben gefahren wird, ohne daß das Werkstück selber bewegt wird. Es ist aber auch möglich, daß nach Vollendung des Sägeschnitts und vor dem Hochfahren des Sägerahmens 24 derjenige Teil des Werkstücks, welcher an dem Schlitten 48 fixiert ist, entgegen der Zuführungsrichtung 44 von dem Sägeband weggefahren wird und danach der Sägerahmen 24 hochgefahren wird.

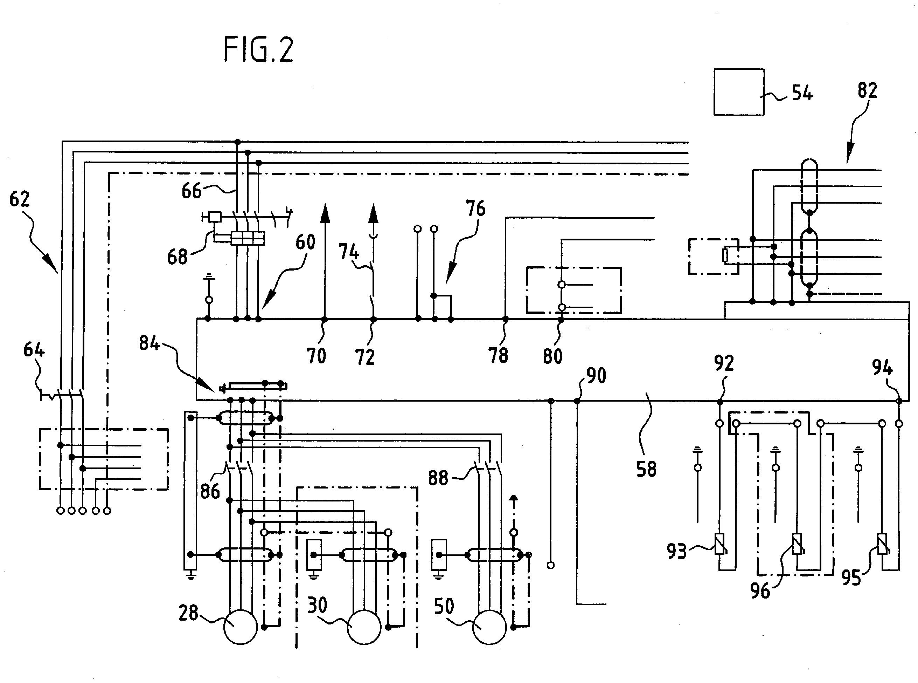

Die entsprechenden Vorgänge sind durch eine Steuerungseinrichtung 54 (Figur 2), wie eine SPS-Steuerungseinrichtung (speicherprogrmmierbare Steuerung) gesteuert, welche insbesondere in einem Schaltkasten 56 angeordnet ist. Der Schaltkasten 56 ist beispielsweise an dem Maschinengestell 12 fixiert.

Der Sägeantrieb 28 bildet einen ersten Antrieb und der Antrieb 50 für den Schlitten 48 (Nachschubschlittem für das Werkstück) bildet einen zweiten Antrieb, welche unabhängig voneinander aktivierbar sind. Solange ein Sägevorgang stattfindet, das heißt so lange das Sägeband über den Sägeantrieb 28 angetrieben ist, muß der Schlitten 48 nicht betätigt werden. Ebenso muß während einer Betätigung des Schlittens 48 zur Zuführung eines Werkstücks bzw. zum Wegführen eines Werkstücks das Sägeband nicht betrieben werden, das heißt der Sägeantrieb 28 muß nicht angesteuert werden.

Erfindungsgemäß ist dem Sägeantrieb 28 und dem Antrieb 50 für den Schlitten 48 ein gemeinsamer Frequenzumrichter 58 (Figur 2) zugeordnet. Dieser Frequenzumrichter 58 ist mit der Steuerungseinrichtung 54 verbunden und in dem Schaltkasten 56 untergebracht.

Ein Frequenzumrichter dient dazu, die Netzfrequenz (die beispielsweise 50 Hz oder 60 Hz beträgt) umzurichten. Die entsprechenden Antriebe (in dem gezeigten Ausführungsbeispiel die Antriebe 28, 30, 50) werden dann mit dieser umgerichteten Netzfrequenz gespeist, wobei dadurch die Drehzahl des entsprechenden Antriebs und weitere Größen einstellbar ist.

Ein Frequenzumrichter 58 umfaßt beispielsweise einen Gleichrichter, einen Zwischenkreis und einen Wechselrichter, wobei im Gleichrichter die ankommende Wechselspannung gleichgerichtet wird. Der Zwischenkreis glättet dann die Gleichspannung und der Wechselrichter macht aus der Gleichspannung eine sinusbewertete pulsweitenmodulierte Spannung.

Es läßt sich dann die Ausgangsspannung und die wirksame Ausgangsfrequenz einstellen, wodurch wieder eine Drehzahleinstellung für den angesteuerten Antriebsmotor möglich ist. Es läßt sich dabei in einem weiten Bereich ein im wesentlichen drehzahlunabhängiges Drehmoment für den so angesteuerten Antrieb erzielen.

Der Frequenzumrichter 58 ist über eine Einspeisung 60 an eine Wechselstromzuleitung 62 gekoppelt, welche insbesondere dreiphasigen Wechselstrom leitet. In der Zuleitung 62 ist ein Hauptschalter 64 zur Unterbrechung der Zuleitung 62 angeordnet. Von dieser Zuleitung 62 wird elektrische Energie zum Frequenzumrichter 58 abgezweigt, wobei in einer entsprechenden Abzweigung 66 der Einspeisung 60 vorgeschaltet ein Schutzschalter 68 als Sicherung angeordnet ist. Der Frequenzumrichter wandelt diese Eingangsspannung.

Der Frequenzumrichter 58 weist einen Ausgang 70 für eine Stromüberwachung auf.

Ferner ist ein Ausgang 72 für eine Reglerfreigabe als Funktionsfreigabe für den Frequenzumrichter 58 vorgesehen, welchem eine Mehrzahl von in Reihe geschalteten Schaltern 74 nachgeordnet sind. Nur wenn alle Schalter 74 geschlossen sind, erfolgt eine Reglerfreigabe. Beispielsweise ist ein Schalter 74 mit einem Sensor verbunden, welcher überprüft, ob eine Schutztüre an der Sägemaschine 10 geschlossen ist. Ist diese nicht geschlossen, dann ist der entsprechende Schalter geöffnet und es erfolgt keine Reglerfreigabe. Über den Ausgang 72 mit den nachgeordneten Schaltern 74 läßt sich somit eine (kumulative) Überwachung der Hardware der Sägemaschine 10 erreichen.

Der Frequenzumrichter 58 ist über entsprechende Anschlüsse 76 mit elektrischer Energie versorgt, damit er seine internen Funktionen durchführen kann.

Über digitale Eingänge 78, 80 wird die Nachschubgeschwindigkeit in der Zuführungsrichtung 44 aktiviert, das heißt es wird der entsprechende Geschwindigkeitsparameter für die Ansteuerung des Antriebs 50 festgelegt. Die entsprechenden Eingänge 78, 80 (wie auch die Ausgänge 70, 72 mit nachgeordneten Schaltern 74) sind mit der Steuerungseinrichtung 54 verbunden. (Diese Verbindungen sind in der Figur 2 nicht gezeigt.)

Weiterhin ist an den Frequenzumrichter 58 ein Busmodul 82 angeschlossen, welches ebenfalls mit der Steuerungseinrichtung 54 verbunden ist. Dadurch lassen sich Prozeßdaten einstellen. Beispielsweise lassen sich Sollwerte eingeben und/oder es läßt sich eine Parametrierung durchführen. Dies wird unten noch näher beschrieben. Auch eine Parameterumschaltung kann über das Busmodul 82 durchgeführt werden. Weiterhin läßt sich eine Drehrichtungsumkehr über das Busmodul 82 steuern. (Für die Parameterumschaltung oder Drehrichtungsumkehr können auch digitale Eingänge vorgesehen sein.) Ferner lassen sich Daten aus dem Frequenzumrichter 58 auslesen.

Der Frequenzumrichter 58 weist einen Ausgang 84 für die frequenzumgerichtete Wechselspannung auf. Erfindungsgemäß ist es vorgesehen, daß dieser Ausgang 84 mit dem Sägeantrieb 28 verbunden ist und parallel mit dem Antrieb 50 für den Schlitten 48 verbunden ist.

Dem Ausgang 84 ist ein Motorschütz 86 für den Sägeantrieb 28 nachgeschaltet und ein Motorschütz 88 für den Antrieb 50 nachgeschaltet.

Die beiden Antriebe 28, 50 sitzen effektiv - bezogen auf ihre Funktion - jedoch nicht parallel an dem Ausgang 84, sondern sind so angesteuert, daß entweder der Sägeantrieb 28 läuft oder der Antrieb 50 läuft (oder keiner der beiden Antriebe 28, 50 läuft); es wird höchstens einer der Antriebe 28, 50 angesteuert. Dafür sorgt ein entsprechender Schalter bzw. eine entsprechende Schaltung, welche die Motorschütze 86 und 88 umfaßt und welcher bzw. welche sicherstellt, daß nicht gleichzeitig beide Antriebe 28, 50 betätigt werden.

Der Antrieb 30 für die Reinigungsbürste ist effektiv parallel zu dem Sägebandantrieb 28 geschaltet, so daß bei laufendem Sägeantrieb 28 auch die Reinigungsbürste aktiviert ist.

Der Frequenzumrichter 58 weist auch einen potentialfreien Ausgang 90 für Fehlermeldungen des Frequenzumrichters 58 auf.

Ferner ist ein erster Überwachungsausgang 92 für einen Temperaturfühler 93 für den Antrieb 28 und ein zweiter Ausgang für einen Temperaturfühler 95 für den Antrieb 50 vorgesehen. Die beiden Temperaturfühler 93, 95 sind dabei in Reihe geschaltet, so daß bei Überschreiten einer Temperaturschwelle bei mindestens einem der Antriebe 28, 50 ein entsprechendes Warnsignal gegeben wird bzw. die Gesamtvorrichtung abgeschaltet wird.

Es kann auch noch vorgesehen sein, daß ein oder mehrere weitere Temperaturfühler 96 mit den Temperaturfühlern 93, 95 in Reihe geschaltet sind, die Sonderzubehör zugeordnet sind, bei dem eine Temperaturüberwachung stattfinden soll.

Der Sägeantrieb 28 treibt das Sägeband an. Er läuft abhängig vom Material des zu sägenden Werkstücks mit unterschiedlicher Geschwindigkeit. Er weist nur eine Drehrichtung auf und wird je nach Betriebszustand eingeschaltet bzw. ausgeschaltet.

Der Antrieb 50 für den Schlitten 48 sorgt für die Zuführung eines Werkstücks zu dem Führungsportal 22 und damit für die Positionierung des zu sägenden Werkstückes bezüglich des Sägebands. Der Schlitten 48 kann sowohl in der Zuführungsrichtung 44 als auch in der Gegenrichtung verfahren. Es können mehrere Geschwindigkeiten vorgesehen sein.

Dementsprechend sind für die Ansteuerung des Sägeantriebs 28 und des Antriebs 50 unterschiedliche Parametersätze vorgesehen, deren Parameter in dem Frequenzumrichter 58 gespeichert sind. Diese Parameter lassen sich zur Auswahl eines bestimmten Parametersatzes beispielsweise über das Busmodul 82 oder Eingänge des Frequenzumrichters 58 aktivieren. Die für die Antriebe 28, 50 notwendigen Parameter sind in dem Frequenzumrichter 58 abgelegt und die durch die Steuerungseinrichtung 54 vorgegebenen Parametersätze bestimmen dann die Ausgangsgrößen des Frequenzumrichters 58 an dem Ausgang 84, mit welchem der entsprechende Antrieb 28 bzw. 50 angesteuert wird. Insbesondere werden Ausgangsspannung und/oder Ausgangsfrequenz und/oder Drehrichtung und/oder Geschwindigkeit und/oder Rampenverläufe entsprechend dem zugeordneten Parametersatz bestimmt.

Es ist dabei zu einem bestimmten Zeitpunkt nur ein Parametersatz wirksam, nämlich der erste Parametersatz für den ersten Antrieb 28 oder der zweite Parametersatz für den zweiten Antrieb 50 (oder weitere Parametersätze für weitere Antriebe). Dies wird entsprechend über einen Schalter oder eine Schaltung eingestellt, so daß sichergestellt ist, daß höchstens einer der beiden Antriebe 28, 50 in Betrieb ist.

Grundsätzlich ist es auch möglich, daß der Frequenzumrichter 58 weitere Antriebe ansteuert, wenn diese insofern unabhängig von den Antrieben 28, 50 sind, daß diese nicht gleichzeitig mit diesen und mit anderen weiteren Antrieben betätigt werden.

Durch die erfindungsgemäße Lösung wird den Antrieben 28 und 50 nur ein Frequenzumrichter, nämlich der Frequenzumrichter 58, zugeordnet. Dadurch erhält man eine Platzersparnis im Schaltkasten 56; es wird weniger Wärme im Schaltkasten 56 produziert und es sind auch weniger elektrische Störquellen vorhanden. Üblicherweise ist es so, daß die Leistungsaufnahme für den Sägeantrieb 28 größer ist als für den Antrieb 50 für den Schlitten 48 (beispielsweise liegt eine typische Leistungsaufnahme des Antriebs 28 im Bereich von beispielsweise 3 kW oder größer und eine typische Leistungsaufnahme des Antriebs 50 im Bereich 1,5 kW). Durch die erfindungsgemäße Lösung mit einem an die Leistungsaufnahme des Antriebs 28 angepaßten Frequenzumrichters 58 kann auch mit geringem Aufwand die Leistung des Antriebs 50 bei Bedarf erhöht werden, da die Ansteuerung eben über den Frequenzumrichter 58 erfolgt, welcher an den Antrieb 28 angepaßt ist.

Erfindungsgemäß erfolgt eine Ansteuerung der Antriebe 28, 50 der Sägemaschine 10 über den Frequenzumrichter 58, welcher dem ersten Antrieb 28 und dem zweiten Antrieb 50 gemeinsam zugeordnet ist. Es wird dabei sichergestellt, daß der erste Antrieb und der zweite Antrieb zu unterschiedlichen Zeiten betätigt werden, das heißt nicht gleichzeitig betätigt werden. Dies läßt sich bei einer Sägemaschine 10 erreichen, wenn der erste Antrieb 28 ein Sägeantrieb ist und der zweite Antrieb 50 ein Antrieb für einen Schlitten 48 für den Werkstücknachschub ist. Ein Bearbeitungsvorgang eines Werkstücks an der Sägemaschine läßt sich so steuern, daß die beiden Antriebe 28, 50 nicht gleichzeitig betätigt werden müssen.

## Patentansprüche

1. Sägemaschine mit einer Mehrzahl von Antrieben (26; 28; 30; 50) und mit einer Steuerungseinrichtung (54), wobei
ein erster Antrieb (28) und ein zweiter Antrieb (50) so angesteuert sind, daß sie nicht gleichzeitig betätigbar sind, wobei der erste Antrieb (28) ein Sägewerkzeug antreibt und der zweite Antrieb (50) einen Nachschubschlitten (48) für ein oder mehrere Werkstücke antreibt, der erste Antrieb (28) und der zweite Antrieb (50) an einen gemeinsamen Frequenzumrichter (58) gekoppelt sind, und der Frequenzumrichter (58) einen Ausgang (72) aufweist, welchem eine Mehrzahl von in Reihe geschalteten Schaltern (74) nachgeordnet ist.

2. Sägemaschine nach Anspruch 1, **dadurch gekennzeichnet, daß** über den Frequenzumrichter (58) die Drehzahl des ersten Antriebs (28) und die Drehzahl des zweiten Antriebs (50) einstellbar sind.

3. Sägemaschine nach Anspruch 1 oder 2, **dadurch gekennzeichnet, daß** der erste Antrieb (28) und der zweite Antrieb (50) zu unterschiedlichen Zeiten betätigt sind.

4. Sägemaschine nach einem der vorangehenden Ansprüche, **dadurch gekennzeichnet, daß** der Frequenzumrichter (58) den ersten Antrieb (28) gemäß einem ersten Parametersatz ansteuert.

5. Sägemaschine nach einem der vorangehenden Ansprüche, **dadurch gekennzeichnet, daß** der Frequenzumrichter (58) den zweiten Antrieb (50) gemäß einem zweiten Parametersatz ansteuert.

6. Sägemaschine nach Anspruch 4 oder 5, **dadurch gekennzeichnet, daß** die Parameter für den ersten Parametersatz und/oder den zweiten Parametersatz in dem Frequenzumrichter (58) abgelegt sind.

7. Sägemaschine nach einem der Ansprüche 4 bis 6, **dadurch gekennzeichnet, daß** der erste Parametersatz und der zweite Parametersatz verschieden sind.

8. Sägemaschine nach einem der Ansprüche 4 bis 7, **dadurch gekennzeichnet, daß** für den ersten Antrieb (28) und den zweiten Antrieb (50) jeweils mindestens eine der Größen Spannung, Frequenz, Drehrichtung, Geschwindigkeit oder Rampenverlauf einstellbar ist.

9. Sägemaschine nach einem der Ansprüche 4 bis 8, **dadurch gekennzeichnet, daß** über die Steuerungseinrichtung (54) zwischen dem ersten Parametersatz und dem zweiten Parametersatz umschaltbar ist.

10. Sägemaschine nach einem der vorangehenden Ansprüche, **dadurch gekennzeichnet, daß** mindestens ein Schalter oder eine Schaltung vorgesehen ist, welcher oder welche so ausgebildet ist, daß höchstens ein Antrieb (28; 50) angesteuert ist.

11. Sägemaschine nach einem der vorangehenden Ansprüche, **dadurch gekennzeichnet, daß** der erste Antrieb (28) ein Sägeband antreibt.

## Claims

1. A sawing machine comprising a plurality of drives (26; 28; 30; 50) and comprising a control unit (54)
wherein a first drive (28) and a second drive (50) are controlled in such a manner that they are not operable at the same time, wherein the first drive (28) drives a sawing tool and the second drive (50) drives a feed carriage (48) for one or more work-pieces, the first drive (28) and the second drive (50) are coupled to a common frequency converter (58), and the frequency converter (58) has an output, downstream of which there is a plurality of switches (74) connected in series.

2. A sawing machine in accordance with Claim 1, **characterised in that** the rotational speed of the first drive (28) and the rotational speed of the second drive (50) are adjustable by the frequency converter (58).

3. A sawing machine in accordance with Claim 1 or 2, **characterised in that** the first drive (28) and the second drive (50) are operated at different times.

4. A sawing machine in accordance with any of the preceding Claims, **characterised in that** the frequency converter (58) controls the first drive (28) in accordance with a first set of parameters.

5. A sawing machine in accordance with any of the preceding Claims, **characterised in that** the frequency converter (58) controls the second drive (50) in accordance with a second set of parameters.

6. A sawing machine in accordance with Claim 4 or 5, **characterised in that** the parameters for the first set of parameters and/or the second set of parameters are stored in the frequency converter (58).

7. A sawing machine in accordance with any of Claims 4 to 6 **characterised in that** the first set of parameters and the second set of parameters are different.

8. A sawing machine in accordance with any of Claims 4 to 7, **characterised in that** at least one of the variables, voltage, frequency, direction of rotation, speed or ramp function is adjustable for each of the first drive (28) and the second drive (50).

9. A sawing machine in accordance with any of Claims 4 to 8, **characterised in that** switching between the first set of parameters and a second set of parameters for controlling the second drive is effected by the control unit (54).

10. A sawing machine in accordance with any of the preceding Claims, **characterised in that** there is provided at least one switch or at least one circuit which is constructed in such a manner that at most one drive (28; 50) is controlled.

11. A sawing machine in accordance with any of the preceding Claims, **characterised in that** the first drive (28) drives a band-saw blade.

## Revendications

1. Machine à scier avec une pluralité de dispositifs d'entraînement (26; 28; 30; 50) et avec un dispositif de commande (54),
dans laquelle un premier dispositif d'entraînement (28) et un deuxième dispositif d'entraînement (50) sont pilotés de telle sorte qu'ils ne peuvent pas être actionnés de manière simultanée, dans laquelle le premier dispositif d'entraînement (28) entraîne un outil de sciage et le deuxième dispositif d'entraînement (50) entraîne un chariot de ravitaillement (48) pour une ou plusieurs pièces, le premier dispositif d'entraînement (28) et le deuxième dispositif d'entraînement (50) sont couplés à un convertisseur de fréquence (58) commun, et le convertisseur de fréquence (58) présente une sortie (72), en aval de laquelle est disposée une multitude de commutateurs (74) branchés en série.

2. Machine à scier selon la revendication 1, **caractérisée en ce que** la vitesse de rotation du premier dispositif d'entraînement (28) et la vitesse de rotation du deuxième dispositif d'entraînement (50) peuvent être réglées par l'intermédiaire du convertisseur de fréquence (58).

3. Machine à scier selon la revendication 1 ou 2, **caractérisée en ce que** le premier dispositif d'entraînement (28) et le deuxième dispositif d'entraînement (50) sont actionnés à des moments différents.

4. Machine à scier selon l'une quelconque des revendications précédentes, **caractérisée en ce que** le convertisseur de fréquence (58) pilote le premier dispositif d'entraînement (28) selon un premier jeu de paramètres.

5. Machine à scier selon l'une quelconque des revendications précédentes, **caractérisée en ce que** le convertisseur de fréquence (58) pilote le deuxième dispositif d'entraînement (50) selon un deuxième jeu de paramètres.

6. Machine à scier selon la revendication 4 ou 5, **caractérisée en ce que** les paramètres pour le premier jeu de paramètres et/ou pour le deuxième jeu de paramètres sont enregistrés dans le convertisseur de fréquence (58).

7. Machine à scier selon l'une quelconque des revendications 4 à 6, **caractérisée en ce que** le premier jeu de paramètres et le deuxième jeu de paramètres sont différents.

8. Machine à scier selon l'une quelconque des revendications 4 à 7, **caractérisée en ce que** respectivement au moins une des grandeurs parmi la tension, la fréquence, le sens de rotation, la vitesse ou le tracé de rampe peut être réglée pour le premier dispositif d'entraînement (28) et le deuxième dispositif d'entraînement (50).

9. Machine à scier selon l'une quelconque des revendications 4 à 8, **caractérisée en ce que** le dispositif de commande (54) permet de passer entre le premier jeu de paramètres et le deuxième jeu de paramètres.

10. Machine à scier selon l'une quelconque des revendications précédentes, **caractérisée en ce qu'**au moins un commutateur ou un circuit est prévu, qui est réalisé de telle sorte qu'au maximum un dispositif d'entraînement (28 ; 50) est piloté.

11. Machine à scier selon l'une quelconque des revendications précédentes, **caractérisée en ce que** le premier dispositif d'entraînement (28) entraîne une lame de scie.
